# EUROPÄISCHE PATENTSCHRIFT

(11) **EP 1 070 656 B1**
(45) Veröffentlichungstag und Bekanntmachung des Hinweises auf die Patenterteilung: **24.08.2005**
(21) Anmeldenummer: 00113113.5
(22) Anmeldetag: 28.06.2000
(51) Int. Cl.: B62D 25/06, B62D 25/04, B62D 21/15

(54) **Innensäulenelement für die B- oder C-Säule einer Fahrzeugkarosserie**
Inner piller structure for the B- or C-pillar of a vehicle body
Structure intérieure de montant B ou C de carrosserie automobile

(30) Priorität: 19.07.1999 DE 19933785
(43) Veröffentlichungstag der Anmeldung: 24.01.2001
(73) Patentinhaber: Volkswagen Aktiengesellschaft, 38436 Wolfsburg (DE)
(72) Erfinder: Morsch, Klaus-Dieter, 38112 Braunschweig (DE); Hillmann, Jürgen, Dr., 38518 Gifhorn (DE)

(56) Entgegenhaltungen:
- EP-A- 0 806 324
- EP-A- 0 980 816
- PATENT ABSTRACTS OF JAPAN vol. 013, no. 183 (M-820), 28. April 1989 (1989-04-28) & JP 01 012976 A (NITTO ELECTRIC IND CO LTD), 17. Januar 1989 (1989-01-17)

## Beschreibung

Die Erfindung betrifft ein Innensäulenelement für die B- oder C-Säule der Fahrzeugkarosserie eines Kraftfahrzeugs zum Schutz eines Fahrzeuginsassen bei einem durch einen Unfall verursachten Aufprall des Fahrzeuginsassen, wobei das Innensäulenelement mindestens einen Energieabsorptionsbereich aufweist und der Energieabsorptionsbereich zumindest zur teilweisen Absorption der durch den Unfall verursachten Aufprallenergie des Fahrzeuginsassen ausgebildet ist.

Im Stand der Technik, von dem die Erfindung ausgeht, sind Innensäulenelemente bekannt, die als Dämmaterial oder Dämmstoffe ausgeführt sind und die jeweils an den entsprechenden Stellen der Karosseriesäulen auf der Fahrgastraumseite angeordnet werden, um insbesondere einen entsprechenden Kopfaufprallschutz für die Fahrzeuginsassen zu gewährleisten. Im Stand der Technik bildet das als Dämmaterial ausgeführte Innensäulenelement selbst einen entsprechenden Energieabsorptionsbereich, da das Dämmaterial eine bestimmte Elastizität aufweist, so daß ein Fahrzeuginsasse, der aufgrund eines Unfalls im Fahrzeug plötzlich hin- und hergeworfen wird, bzw. dessen Kopf bei einem seitlichen Verkehrsunfall plötzlich in Richtung auf die B- oder Säule der Fahrzeugkarosserie "geschleudert" wird bzw. hiergegen prallt, keinem großen Verletzungsrisiko unterworfen ist. Durch die an den entsprechenden Stellen der B- und C-Säule auf der Seite des Fahrgastraums angeordneten Innensäulenelemente, die als Dämmaterial ausgebildet sind, wird die Aufprallenergie des Fahrzeuginsassen zumindest teilweise "geschluckt" bzw. der Aufprall selbst entsprechend abgemildert, so daß der das Verletzungsrisiko erhöhende "harte Schlag" bzw. "harte Aufprall" entsprechend vermieden werden kann.

Weiterhin ist es im Stand der Technik durchaus bekannt, derartiges Dämmaterial oder Dämmstoffe an anderen für den Fahrzeuginsassen aufprallgefährdeten Stellen anzuordnen, um hier entsprechende Energieabsorptionsbereiche auszubilden, mit dem Ziel, das Verletzungsrisiko für den oder die Fahrzeuginsassen zu minimieren.

Bei dem bisher bekannten üblichen Innensäulenelementen, die als Dämmaterial ausgeführt sind, ist insbesondere von Nachteil, daß deren Anordnung bzw. Befestigung in entsprechenden separaten Arbeitsschritten erfolgt und daher sehr arbeitsaufwendig ist. Weiterhin muß für die Anordnung dieser als Dämmaterial ausgeführten Innensäulenelemente der entsprechende Raumbedarf zur Verfügung stehen, so daß aufgrund des nach der Anbringung der als Dämmaterial ausgeführten Innensäulenelemente nunmehr geringeren zur Verfügung stehenden Raumes auch die nachfolgenden Arbeitsschritte aufwendiger werden können.

Weiterer Stand der Technik ist aus der DE-PS 574 777, aus der DE-PS 692 243 und aus der EP 0 806 324 A2 bekannt. Die EP 0 806 324 A2 offenbart beispielsweise eine Kraftfahrzeugtür mit Seitenaufprallschutz in Form eines sich in Fahrzeuglängsrichtung erstreckenden Trägerelementes. Das Trägerelement ist seinerseits fahrzeuginnenseitig in Fahrzeugquerrichtung verformungsweich und im Wesentlichen nach Art eines Hohlprofils gebildet, wobei zwischen einer fahrzeuginnenseitigen Anprallwand und einer der Fahrzeugaußenseite zugewandten Hinterwand ein durch Perforation und/oder Lochung des Hohlprofils erzeugter Energieabsorptionsbereich vorgesehen ist.

Der Erfindung liegt daher die Aufgabe zugrunde, ein Innensäulenelement der eingangs genannten Art derart auszugestalten und weiterzubilden, daß die für den Fahrzeuginsassen vorteilhaften Energieabsorptionseigenschaften gewährleistet sind, wobei der Arbeitsaufwand zur Anordnung bzw. Befestigung des entsprechenden Innensäulenelements verringert ist.

Die zuvor aufgezeigte Aufgabe ist nun dadurch gelöst, daß das Innensäulenelement als Innensäulenblech ausgeführt ist und daß der im Innensäulenblech vorgesehene Energieabsorptionsbereich im wesentlichen mit Hilfe von mehreren Durchgangslöchern realisiert ist, die ihrerseits im wesentlichen rund ausgebildet sind. Dadurch, daß das Innensäulenelement als Innensäulenblech ausgeführt ist, ist dessen Handhabung, Anbringung sowie Befestigung wesentlich vereinfacht. Des weiteren können an bestimmten Stellen üblicherweise angeordnete entsprechende Bleche auch direkt als Innensäulenelemente ausgebildet werden, die den entsprechenden Energieabsorptionsbereich, also die entsprechenden Durchgangslöcher aufweisen. Es entfällt folglich die Anordnung von zusätzlichen Elementen, wie die im Stand der Technik üblichen Dämmstoffe, sondern zumindest teilweise bereits vorhandene Elemente, nämlich Bleche, werden zu dem erfindungsgemäßen Innensäulenelement entsprechend durch die Realisierung der Durchgangslöcher "umgestaltet". Durch den Wegfall der zusätzlichen Elemente, nämlich der Dämmstoffe, ist einerseits der Arbeitsaufwand wesentlich verringert, andererseits der entsprechende Raum nach wie vor gegeben, so daß auch die an die Befestigung der Innensäulenelemente sich anschließenden Arbeitsschritte nicht verkompliziert, also nicht aufwendiger werden.

Es gibt nun eine Vielzahl von Möglichkeiten, das erfindungsgemäße Innensäulenelement in vorteilhafter Weise auszugestalten und weiterzubilden. Hierfür darf an dieser Stelle auf die dem Patentanspruch 1 nachgeordneten Patentansprüche verwiesen werden. Im übrigen wird nun eine bevorzugte Ausführungsform der Erfindung anhand einer Zeichnung näher erläutert. In der Zeichnung zeigt
- Fig. 1: die schematische Darstellung der Fahrzeugkarosserie eines Kraftfahrzeugs von der Seite und
- Fig. 2: einen Ausschnitt der Fig. 1, nämlich die C-Säule der in Fig. 1 dargestellten Fahrzeugkarosserie, teilweise geschnitten in einer vergrößerten Darstellung von der Seite.

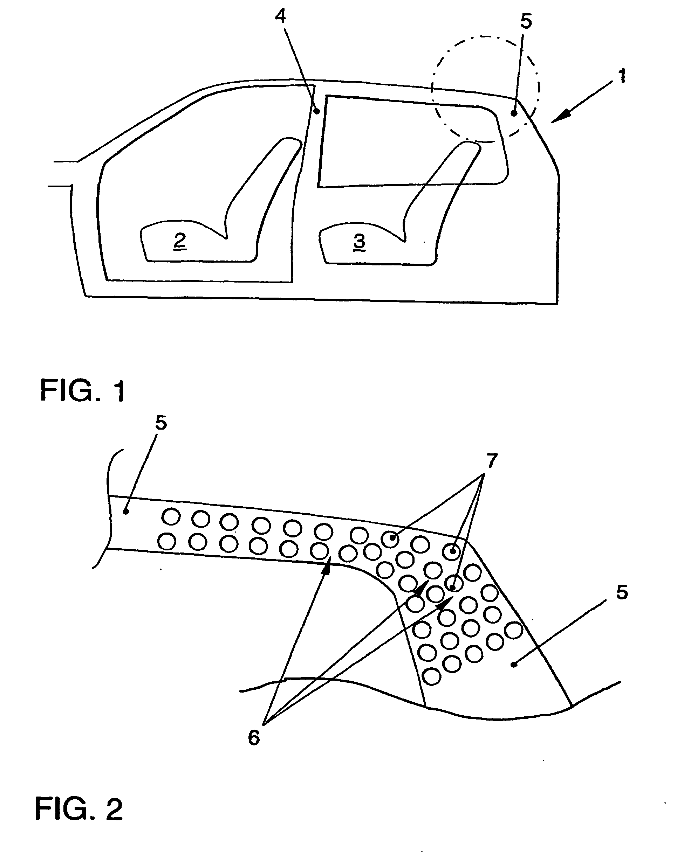

Fig. 1 zeigt in einer schematischen Darstellung von der Seite die Fahrzeugkarosserie 1 eines Kraftfahrzeugs. Gut zu erkennen sind hier die Vordersitze 2 und die Rücksitze 3. Ferner ist als Bestandteil der Fahrzeugkarosserie 1 die B-Säule 4 und die C-Säule 5 zu erkennen. Der umstrichelt dargestellte Bereich der C-Säule 5 wird in Fig. 2 vergrößert dargestellt. Da es sich um schematische Darstellungen handelt, die ein innerhalb des Bereichs der C-Säule 5 angeordnetes erfindungsgemäßes Innensäulenelement zeigen, wobei dieses Innensäulenelement nicht deutlich zu erkennen ist, ist das erfindungsgemäße Innensäulenelement auch mit keinem gesonderten Bezugszeichen versehen worden.

Das hier nicht näher bezeichnete Innensäulenelement wird nun im Bereich der B- oder C-Säule 4 oder 5 der Fahrzeugkarosserie 1 zum Schutz eines auf dem Vordersitz 2 oder Rücksitz 3 sitzenden Fahrzeuginsassen auf der Fahrgastraumseite entsprechend angeordnet. Bei einem Unfall, insbesondere einem seitlichen Auffahrunfall eines anderen Pkw kann es vorkommen, daß der Fahrzeuginsasse mit einem Körperteil gegen die B- oder C-Säule 4 oder 5 schlägt bzw. aufprallt. Um entsprechende Verletzungen zu vermeiden, weist das Innensäulenelement einen Energieabsorptionsbereich 6 auf, wobei der Energieabsorptionsbereich 6 zumindest zur teilweisen Absorption der durch den Unfall verursachten Aufprallenergie des Fahrzeuginsassen ausgebildet ist.

Die eingangs beschriebenen Nachteile werden nun dadurch vermieden, daß das Innensäulenelement als Innensäulenblech ausgeführt ist und daß der im Innensäulenblech vorgesehene Energieabsorptionsbereich 6 im wesentlichen mit Hilfe von mehreren Durchgangslöchern 7 realisiert ist, die ihrerseits im wesentlichen rund ausgebildet sind. Je nachdem an welcher Stelle das erfindungsgemäß ausgebildete Innensäulenelement an der B- oder C-Säule 4 oder 5 auf der Fahrgastraumseite entsprechend angeordnet ist, können die Aufprallenergien unterschiedlicher Körperteile (Schulter- oder Kopfbereich) eines Fahrzeuginsassen entsprechend "geschluckt" werden, so daß entsprechende Verletzungen für den Fahrgast oder Fahrzeuginsassen vermieden werden.

Die Fig. 1 und 2 zeigen nun ein in der Säule 5 angeordnetes nicht näher bezeichnetes Innensäulenelement, dessen Energieabsorptionsbereich 6 für den Fahrzeuginsassen, nämlich den auf dem Rücksitz 3 sitzenden Fahrzeuginsassen einen Kopfaufprallschutz realisiert. Das Innensäulenelement ist nämlich so angeordnet, daß dessen Energieabsorptionsbereich 6 in Höhe des Kopfaufschlagbereichs entsprechend an bzw. innerhalb der C-Säule 5 angeordnet ist, wodurch ein Schutz für den Fahrzeuginsassen bei einem Seitencrash realisiert ist.

Vorteilhafterweise ist der Energieabsorptionsbereich 6 so ausgebildet, daß durch die Anzahl, Größe und die Anordnung der Durchgangslöcher 7 ein Energieabsorptionsbereich ausgebildet ist, der einen geringen Rückpralleffekt aufweist. Dies hat insbesondere den Vorteil, daß die sowieso bei einem Aufprall schon belastete Halswirbelsäule des Fahrzeuginsassen nach dem Aufprall des Kopfes auf den Bereich der B- oder C-Säule 4 oder 5 nicht umgehend wieder direkt einer plötzlichen starken entgegengesetzten Neigung unterworfen wird, wodurch Wirbelschäden vermieden werden können.

Vorteilhafterweise weisen die Durchgangslöcher 7 einen Durchmesser von 6 bis 10 mm auf, wobei bei der hier dargestellten Ausführungsform im wesentlichen ca. 40 Durchgangslöcher 7 in dem als Innensäulenblech ausgebildeten Innensäulenelement vorgesehen sind.

Weiterhin kann durch die Durchgangslöcher 7 ein bestimmtes Lochbild definiert werden, das die entsprechenden Anforderungen, insbesondere die bestimmte Dämpfungs-Weg-Kennung des Innensäulenelements entsprechend realisiert, die für dessen Einsatz gewünscht ist. Bei der hier gezeigten Ausführungsform beträgt der Abstand der im Lochbild außen liegenden Durchgangslöcher 7 zum direkt benachbarten Rand des Innensäulenblechs ca. 6 bis 10 mm.

Durch das hier gezeigte Innensäulenelement, das als Innensäulenblech ausgeführt ist, ist ein entsprechender Kopfaufprallschutz für den Fahrzeuginsassen realisiert, insbesondere dadurch, daß das Innensäulenblech im Kopfaufprallbereich durch die Durchgangslöcher 7 entsprechend geschwächt ist. Durch die Ausbildung eines derartigen Innensäulenelements entfällt das bisher im Stand der Technik zusätzlich erforderliche Energieabsorptionsmaterial (Schaumstoffe o.ä.), wobei ein gleicher Aufprallschutz gegeben ist und zusätzlich noch eine Gewichtsersparnis für die gesamte Fahrzeugkarosserie erzielt werden kann. Von Vorteil ist auch, daß die Einstellung des "Rückpralleffekts" durch eine bestimmte Ausbildung des Lochbilds bzw. Anordnung der Durchgangslöcher 7 in bestimmten Bereichen des Innensäulenelements realisierbar ist.

## Patentansprüche

1. Innensäulenelement für die B- oder Säule (4, 5) der Fahrzeugkarosserie (1) eines Kraftfahrzeuges zum Schutz eines Fahrzeuginsassen bei einem durch einen Unfall verursachten Aufprall des Fahrzeuginsassen, wobei das Innensäulenelement mindestens einen Energieabsorptionsbereich (6) aufweist und der Energieabsorptionsbereich (6) zumindest zur teilweisen Absorption der durch den Unfall verursachten Aufprallenergie des Fahrzeuginsassen ausgebildet ist und **dadurch gekennzeichnet, daß** das Innensäulenelement als Innensäulenblech ausgeführt und der im Innensäulenblech vorgesehene Energieabsorptionsbereich (6) im wesentlichen mit Hilfe von mehreren Durchgangslöchern (7) realisiert ist, wobei die Durchgangslöcher (7) im wesentlichen rund ausgebildet sind.

2. Innensäulenelement nach dem vorhergehenden Anspruch, **dadurch gekennzeichnet, daß** durch den Energieabsorptionsbereich (6) für den Fahrzeuginsassen ein Kopfaufprallschutz realisierbar ist.

3. Innensäulenelement nach einem der vorhergehenden Ansprüche, **dadurch gekennzeichnet, daß** durch die Anzahl, Größe und Anordnung der Durchgangslöcher (7) ein Energieabsorptionsbereich (6) ausgebildet ist.

4. Innensäulenelement nach einem der vorhergehenden Ansprüche, **dadurch gekennzeichnet, daß** die Durchgangslöcher (7) einen Durchmesser von 6 bis 10 mm aufweisen.

5. Innensäulenelement nach einem der vorhergehenden Ansprüche, **dadurch gekennzeichnet, daß** im wesentlichen 40 Durchgangslöcher (7) vorgesehen sind.

6. Innensäulenelement nach einem der vorhergehenden Ansprüche, **dadurch gekennzeichnet, daß** durch die Durchgangslöcher (7) ein bestimmtes Lochbild definiert ist.

7. Innensäulenelement nach einem der vorhergehenden Ansprüche, **dadurch gekennzeichnet, daß** der Abstand der im Lochbild außen liegenden Durchgangslöcher (7) zum direkt benachbarten Rand des Innensäulenbleches 6 bis 10 mm beträgt.

8. Innensäulenelement nach einem der vorhergehenden Ansprüche, **dadurch gekennzeichnet, daß** das als Innensäulenblech ausgeführte Innensäulenelement auf der Fahrgastraumseite der C-Säule (5) im oberen Bereich der C-Säule (5) angeordnet ist.

## Claims

1. Inner pillar element for the B-pillar or C-pillar (4, 5) of the vehicle body (1) of a motor vehicle, for protecting a vehicle occupant in the event of an impact of the vehicle occupant caused by an accident, the inner pillar element having at least one energy absorption region (6), and the energy absorption region (6) being configured at least for the partial absorption of the impact energy of the vehicle occupant caused by the accident, **characterized in that** the inner pillar element is configured as an inner pillar metal sheet and the energy absorption region (6) which is provided in the inner pillar metal sheet is realized substantially with the aid of a plurality of through holes (7), the through holes (7) being of substantially round configuration.

2. Inner pillar element according to the preceding claim, **characterized in that** head impact protection can be realized by the energy absorption region (6) for the vehicle occupant.

3. Inner pillar element according to one of the preceding claims, **characterized in that** an energy absorption region (6) is configured by the number, size and arrangement of the through holes (7).

4. Inner pillar element according to one of the preceding claims, **characterized in that** the through holes (7) have a diameter of from 6 to 10 mm.

5. Inner pillar element according to one of the preceding claims, **characterized in that** substantially 40 through holes (7) are provided.

6. Inner pillar element according to one of the preceding claims, **characterized in that** a specific hole pattern is defined by the through holes (7).

7. Inner pillar element according to one of the preceding claims, **characterized in that** the spacing of the through holes (7) which lie on the outside in the hole pattern to the directly adjacent edge of the inner pillar metal sheet is from 6 to 10 mm.

8. Inner pillar element according to one of the preceding claims, **characterized in that** the inner pillar element, configured as an inner pillar metal sheet, on the passenger compartment side of the C-pillar (5) is arranged in the upper region of the C-pillar (5).

## Revendications

1. Elément de montant intérieur pour le montant B ou C (4, 5) de la carrosserie du véhicule (1) d'un véhicule automobile pour la protection d'un occupant du véhicule dans le cas d'un choc de l'occupant du véhicule provoqué par un accident, dans lequel l'élément de montant intérieur présente au moins une région d'absorption d'énergie (6) et la région d'absorption d'énergie (6) est réalisée au moins pour une absorption partielle de l'énergie de choc de l'occupant du véhicule provoquée par l'accident et **caractérisé en ce que** l'élément de montant intérieur est réalisé en tant que tôle de montant intérieure et la région d'absorption d'énergie (6) prévue dans la tôle de montant intérieure est réalisée essentiellement à l'aide de plusieurs trous traversants (7), les trous traversants (7) étant réalisés essentiellement avec une forme ronde.

2. Elément de montant intérieur selon la revendication précédente, **caractérisé en ce que** l'on peut réaliser une protection de la tête contre les chocs par la région d'absorption d'énergie (6) pour l'occupant du véhicule.

3. Elément de montant intérieur selon l'une quelconque des revendications précédentes, **caractérisé en ce qu'**une région d'absorption d'énergie (6) est réalisée par le nombre, la taille et l'agencement des trous traversants (7).

4. Elément de montant intérieur selon l'une quelconque des revendications précédentes, **caractérisé en ce que** les trous traversants (7) présentent un diamètre de 6 à 10 mm.

5. Elément de montant intérieur selon l'une quelconque des revendications précédentes, **caractérisé en ce que** l'on prévoit essentiellement 40 trous traversants (7).

6. Elément de montant intérieur selon l'une quelconque des revendications précédentes, **caractérisé en ce qu'**un motif de trous déterminé est défini par les trous traversants (7).

7. Elément de montant intérieur selon l'une quelconque des revendications précédentes, **caractérisé en ce que** la distance des trous traversants (7) situés à l'extérieur dans le motif de trous par rapport au bord directement adjacent de la tôle de montant intérieure est de 6 à 10 mm.

8. Elément de montant intérieur selon l'une quelconque des revendications précédentes, **caractérisé en ce que** l'élément de montant intérieur réalisé sous forme de tôle de montant intérieure est disposé du côté du montant C (5) tourné vers l'habitacle dans la région supérieure du montant C (5).
